# EUROPEAN PATENT APPLICATION

(11) **EP 1 956 414 A1**
(43) Date of publication of application: **13.08.2008**
(21) Application number: 08001999.5
(22) Date of filing: 03.02.2008
(51) Int. Cl.: G02B 27/22, G02B 1/10, B42D 15/10

(54) **Lenticular foils or linear Fresnel lenses provided with a highly refractive layer**

(30) Priority: 09.02.2007 BE 200700052
(71) Applicant: Leo Vermeulen Consulting LVC, 2270 Herenthout (BE)
(72) Inventor: Vermeulen, Leon Louis Marie, 8300 Knokke-Heist (BE); Caubergh, Johann Sebastiaan, 3470 Kortenaken (BE); Vermeulen, Geert Jozef D., 2230 Herselt (Ramsel) (BE)

(57) **Abstract**

A composition comprising a transparent or semi-transparent support, transparent cr semi-transparent lenticular or linear Fresnel lenses, on top of which a transparent or semi-transparent layer with high refractive index (HRI) is provided without destroying the effect of the lenticular or linear Fresnel lenses. On top of the layer with high refractive index, different types of functional layers such as anti-scratch or conductive layers can be applied. The composition can be used, amongst others, to secure security documents.

## Description

### FIELD OF THE INVENTION

The present invention relates to lenticular and/or linear Fresnel foils, films and plates.

### BACKGROUND OF THE INVENTION

The principle of the use of the lenticular or linear Fresnel foils, films or plates to produce different types of 3-D images, flip-flop images, moving images, animation images or different types of "zoom" effect, "morphing" effect etc are very well know by people skilled in the art.

This technique is getting more and more popular in the advertising world to attract the attention of the peoples, but it is also used to secure some documents such as ID-cards, drivers licenses, social cards, passports, credit cards and other types of banc cards and documents.

The main purpose of the use of this lenticular or linear Fresnel lenses is to get a higher level of security of the cards and documents but also to avoid that they will be copied, falsified, counterfeited or forged and in addition by using these types of lenses it gives the possibility to check the cards/documents faster, easier and on a more secure way.

The way the existing lenticular lenses are implemented on the cards is expensive and they are always placed on the place of the card .An additional disadvantage is that the lenses are placed on the surface of the card and so they are very visible but also very quickly damaged during use, and as a consequence the effect of the lenses , ( 3-D or moving or flip-flop images) and their visibility will decrease and even disappear after a period using the document.

Especially for securing official documents such as ID-cards it is a handicap due to the fact that these documents have a lifetime of 5 to 10 years.

In the state of the art a lot of techniques are known and used to secure documents/cards such as : rainbow printing, micro text printing, UV printing, IR printing, OVI printing, using a magnetic stripe or implementing contact or contactless chip, printing of OCR text ( optical Character Recognition) printing or 1 or 2 D barcode, adding an hologram ( metallic or high refractive index types) etc. All these elements have given the card/documents a higher level of security, but it is not enough for most part of the users such as : cash keeper in the shop or a bank clerk, to carry out an easy and quick, adequate control.

The use of lenticular lenses gives the user the possibility of controlling the authenticity of the document or of the card without needing extra aids such as reading devices for reading a chip or for reading OCR text (optical character recognition) or an ultra violet (UV) lamp for detecting UV printed items or a small microscope for reading microtext.

It is clear that de lenticular lenses are a very good tool to check the genuineness of the document on a first level control even by people that are not specialized or do not have have access to the required checking equipment.

But as indicated before, these lenses are expensive, visible and always on the same place of the document /card.

It is an object of this invention to provide a solution for the problems related to the existing state of the art mentioned above.

### SUMMARY OF THE INVENTION

The present invention provides a composition of a transparent or semi-transparent support and a layer comprising lenticular or linear Fresnel lenses, characterized in that on said layer with the lenticular or linear Fresnel lenses a transparent or semi-transparent layer of high refractive index (HRI) is provided.

The layer with the lenticular or linear Fresnel lenses will be called "lenticular layer" hereafter.

The present invention provides that the high refractive index (HRI) means an refractive index of at least 0.1 higher than the refractive index of the lenticular layer itself, the difference in refractive index is preferably is 0.3 or higher, because the effect of it will be better

According to the present invention the layer of the high refractive index is transparent or semi-transparent in visible spectrum of the light.

According to the present invention provides a transparent or semi-transparent layer of high refractive index on a layer of lenticular lenses. The following products can be used as transparent or semi-transparent high refractive materials siliciumoxide, zirconiumoxide, titaniumoxide, zincsulfide etc. This enumeration is not exhaustive, more information will be given in the detailed description of this invention.

The said layer with high refractive index can be applied in different ways on the lenticular lenses, for example as vacuum deposit, as vacuum sputtering, as coating, as plasma coating, this layer can be very thin layer or the layer can be applied as a thick one, as a polymer coating if the refractive index of the coating is higher as the refractive index of the lenses.

In another embodiment of the present invention the lenses itself are produced in a polymer material with a high refractive index.

In a preferred embodiment of the present invention at least one additional layer will be applied on the HRI layer or on the lenses existing of a high refractive index. This additional layer is selected from the following list depending on the final application of the complex
- anti-scratch layer
- anti-static layer
- conductive layer
- anti-reflection layer
- anti-glare layer
- anti-graffiti layer
- oil or water repellent layer
- self-cleaning layer
- sol-gel layers
- hologram
- or other layers related to other specific application.

An additional layer can be applied on top of the HRI layer or embedded with a laminate such as a PET-PE complex used for lamination of ID-cards.

Another aspect of the present invention is the method of production of the composition including a transparent or semi-transparent support and a layer including lenticular lenses characterized in that the lenticular lenses is coated with a transparent or semi-transparent layer of a high refractive index.

Different methods of production process are possible: either the lenticular lenses, coated with an high refractive index layer, on top of this HRI layer an additional layer will be applied such as a coated with anti-scratch layer; or on the lenticular lenses, coated with an high refractive index, a complex containing a transparent polymer support coated with a functional layer(as anti-scratch), is glued onto the HRI layer .This embodiment of the present invention gives a final complex that cover complete the lenticular lenses and the lenses itself are not palpable anymore.

In another embodiment of the present invention, the lenticular lenses itself are produced of an high refractive index material and coated with a functional layer such as anti-scratch layer.

### DETAILED DESCRIPTION OF THE INVENTION

Lenticular and linear fresnel lenses, their use, characteristics and production methods are well known by the people skilled in the art. The present invention relates to these lenticular and linear fresnel lenses, produced according to well known, existing production methods.

In general the lenticular lenses are produced by embossing into a coated polymer or extrusion coating of a polymer on a transparent support. A lenticular lens system is using a specific form of thin parallel lenses in the production direction extruded or embossed on a transparent or semi-transparent film (hereafter called "support ").

As(transparent or semi-transparent) support, a film with a higher melting point than the plastic of the lenticular, is used such as oriented polyester, polycarbonate films, acrylic films, polyamide films, oriented polypropylene films etc or combinations of these materials other types or combinations of polymers are possible. A number of useful supports are described in patent US 4,856,857. As polymer, for the production of the lenses itself, mostly PET-g, PVC or ABS is used, other transparent polymers are possible.

In US patent 4,869,946 a detailed description of the use of lenticular lenses in the identification cards is described.

The use of the lenticular lenses and the technique of how to print on this lenticular lenses is already know for a long time and is used for different types of application as are described in following patents US 2,815,310; US 3,225,457; US 3,953,869 and US 3,996,570.

For the application of the lenticular lenses on cards, as described in patent US 4, 869, 946, use is made of the special technique of the viewing angle dependency through the parallel lenses of a lenticular system which are formed or printed on the flat transparent plate or foil. When the plate or foil are turned around the axe parallel to the applied lenses the successive small parts of the underlying base will be visible. As such in case of a personalized card it is possible to see on one angle the face of the owner of the card and on another angle for example his signature or personal number.

This system has the benefit that a much higher amount of information can be stored on the card. On the same place of the card can for example a photo of the owner, number and signature be printed or a 3-D image of the owner in combination with a flip-flop ( text/number/photo) on another area of the card, of course other combination or variations such as adding a hologram is possible. The use of this lenticular system increases the security level of the card, due to the fact that direct copying of the card on a copier is impossible.It is clear to people skilled in the art, that combinations of the lenticular lenses and or linear Fresnel lenses can be combined with the existing security elements used to secure the existing cards or money or documents.

According to the invention a transparent or semi-transparent layer of high refractive index is coated on top of the lenticular lenses or linear Fresnel lenses.

This high refractive layer can be applied in different ways such as sputtering, vacuum deposit( chemical, physical or vacuum), coating, plasma coating etc.

The benefit of applying the HRI layer on the lenses is that other functional layers such as anti-scratch and other layers as described below can be applied without the effect of the lenticular or linear Fresnel lenses fading away. If layers with almost the same refractive index are applied on the lenses the effect of the lenticular or linear Fresnel lenses will fade away.

The methods and materials to produce transparent or semi-transparent layers with high refractive index are state of art. In patent application US 2006/0165864 the use of metal oxide is described, this layer can be applied as chemical, physical or vacuum deposit, the layer can also be applied as coating by using a lacquer to form a film. The high refractive index of the layer is determined by the selection of the inorganic particles with high refractive index. Examples of useful inorganic particles for the application of a transparent metal ( Ti, Zn, Sb, Sn, Zn, Ce, Ta, La, or In)oxide. Mixed metal oxides are also useful such as metal oxides mentioned above together with Si, AL, Fe, W, etc.

In the mentioned patent application, a layer composed of a matrix is described wherein the fine particles contain titanium and at least one metal ion that as oxide a refractive index has of at least 1, 95 and the combined oxide is doped with at least one metal ion selected from the group consisting of Co ion, Zr ion Al ion.

On the high refractive layer, depending on the requested applications other types of functional (transparent or semi-transparent) layers can be applied.

In a first embodiment of this invention, an anti-scratch -layer is applied on the HRI layer, examples of these types of anti-scratch layers are UV curing layers, or polyurethanes layers ; Useful layers are described as Scavor layers(Si:O:C:H layers) of Savcor group Ltd( possible produced with nano particles)or the TSP Duravue 1000 layer from TSP Inc.

In another embodiment of this invention an anti-static layer is applied on top of the high refractive layer

In still another the invention a conductive layer is applied on top of the HRI layer, such as a layer based on Indium Tinoxide (ITO). This layer can be applied by vacuum deposit or coated as nano particles. An alternative is a layer based on polythiofene or polyaniline (as produced by Panipol).

A self cleaning layer can be coated on top of the HRI layer, based on photo- catalytic titanium oxide based on nano particles..By Mr Van der Wal (university Groningen NL) a selfcleaning layer is described based on the "lotus effect", a layer based on a mixture of Teflon and Polystyrene particles, the polystyrene particles are then removed resulting in the small area's being filled with air and being extreme water repellent.

In another embodiment a layer can be chosen out of the following group of layers
- Antiglare layer
- Anti-reflection layer
- Oil or water repellent layer
- Anti-grafitti layer
- Layer based on the sol-gel technology ( known by the people skilled in the art) resulting in the different properties such as chemical resistant, barrier( oxygen) layers, wear resistant etc.

All these layers or foils can be applied by gluing e.g. by using a 2 component PU glue (such as Liofol products from Henkel)

The benefit of applying these layers, in addition to their properties, is that the lenticular and linear Fresnel lenses are protected against damaging of the lenses and that the lenses stay clean( the dirt is not pick-up by the lenticular) due to the smooth surface on top and that the lenticular lenses cannot be felt anymore while the effect of the lenticular and linear Fresnel remains valid, i.e. more information can be stored on the card/document and the security against fraud by copying, altering, falsifying is improved.

This invention is developed in view of the use of the lenticular /linear Fresnel lenses to improve the security of official security documents such as ID -cards, passports, driver's licenses, social cards and credit cards and membership cards and all types of identification cards as securities such as shares or money ( paper and plastic types).

The card/document can be of different composition ( paper types, PVC, ABS, PC, teslin, polyester, polyamide, acrylic and other types) and may contain different types of security elements ( rainbow printing, OVI, UV, IR, micro printing and others) .The card can be of optical readable ( ( LaserCard Systems Corporation), chip card ( contact and contactless), or readable with OCR text, or magnetic stripe or 1-D or 2-D barcode and may include a hologram. The present invention can be implemented in all type of cards or documents, the lenticular/linear Fresnel lenses can be applied partly or on the total surface, can be present on one side or on both sides of the document.

To improve the security of the personalized cards it is required that the lenticular/linear Fresnel system contains at least one element that is related to the identification of the bearer of the card such as image, signature, id number, or 3D image of the person on one viewing angle and an symbol, number or another feature on the other viewing angle. For this reason this system is much more efficient to improve the security of the card relative to a standard hologram, even if that hologram would contain specific lines and designs but which are not related to the owner of the card/document.

The cards or documents can be personalized with different types techniques or systems such as printing( for example offset or inkjet or laser printing ( with toner) or laser engraving or Dye Diffusion Thermal Transfer (D²T²) system or laser ablation as described in WO 2005/043254. Another technique that can be used is the Dye Diffusion Transfer (DTR) or a standard photographic system where the image and personal data of the owner are produced in black and white or color photography. This enumeration is not meant to be exhaustive, alternative or combinations of the mentioned techniques are possible.

The lenticular /linear Fresnel lenses system can be used for a lot of other applications. Examples are: the use of moving images/3-D images on advertising panels, displays, 3D television, on Flexibles LCD displays, displays on GSM's, Ipod's, Electronic agenda's, PDA's, on E-paper applications, OLED's, in combination with electro luminiscent lamps, in the orgacom system from Agfa-Gevaert N.V. based on polyethylene Dioxythiophene (PEDOT), in display for medical application to improve the visibility of X-ray images in 3-D mode and others.

The lenticular /linear Fresnel lenses systems can be implemented in other types of applications such as decoration of snowboards, skis, parts of cars, parts furniture (kitchen doors, bedrooms doors or beds), for injection molding applications ( such as decoration of GSM, laptops, parts of cars etc)

Applications as described above where the invention will be used will be indicated as "item" further on.

Methods for the production of cards with lenticular lenses are well known, as explained in patent US 6, 758, 936, with the description of how to laminate these type of lenticular cards. Other methods as described are well known for people skilled in the art.

The present invention provides a method for the production of a complex existing of a transparent or semi-transparent support and lenticular or linear Fresnel lenses, wherein on the lenticular / linear Fresnel lenses a transparent or semi-transparent high refractive (HRI) layer is provided.

The high refractive index layer can be applied on different ways such as sputtering, vacuum deposit coating or extrusion.

The complex can be laminated inside in different compositions of cards such as paper cards, teslin cards etc.

Different types of laminating techniques can be used such as roll lamination or press lamination, the application is not limited to outside layers.

Transparent HRI holograms can be integrated on top or inside of complex of the present invention.

## Claims

1. A composition comprising a transparent or semi-transparent support and transparent or semi-transparent lenticular or linear Fresnel lenses **characterized in that** a layer with a high refractive (HRI) index is applied on said lenticular or linear Fresnel lenses.

2. A composition according to claim 1 wherein the difference of the refractive index of said layer with high refractive index (HRI) and of said lenticular or linear Fresnel lenses is at least 0.1.

3. A composition according to claim 2 wherein said difference of refractive indices is 0.3.

4. A composition comprising a transparent or semi-transparent support and lenticular or linear Fresnel lenses formed out of a material with a high refractive index.

5. A composition according to any one of claims 1 to 3 wherein on said layer with high refractive index at least one layer is formed selected from the following list
- Anti-scratch layer,
- Anti-static layer,
- Conductive layer,
- Anti-glare layer,
- Anti-reflection layer,
- Oil and/or water repellent layer,
- Anti- graffiti layer,
- Self cleaning layer,
- Sol-gel layer,
- Hologram.

6. A composition according to claim 4 wherein on said lenticular or linear Fresnel lenses at least one layer is formed selected from the following list
- Anti-scratch layer,
- Anti-static layer,
- Conductive layer,
- Anti-glare layer,
- Anti-reflection layer,
- Oil and or water repellent layer,
- Anti- graffiti layer,
- Self cleaning layer,
- Sol-gel layer,
- Hologram.

7. An item containing a composition according to any of the preceding claims.

8. A method for the production of a composition comprising a transparent or semi-transparent support and transparent or semi-transparent lenticular or linear Fresnel lenses **characterized in that** on said transparent or semi-transparent lenticular or linear Fresnel lenses a layer with high refractive index (HRI) is formed.

9. A method according to claim 8 wherein said layer of high refractive (HRI) is applied by sputtering, vacuum deposit or coating.

10. A method according to claim 8 wherein on said layer of high refractive index (HRI) at least one layer is applied selected from the following list
- Anti-scratch layer,
- Anti-static layer,
- Conductive layer,
- Anti-glare layer,
- Anti-reflection layer,
- Oil and or water repellent layer,
- Anti-graffiti layer,
- Self cleaning layer,
- Sol-gel layer,
- Hologram.
